# EUROPÄISCHE PATENTANMELDUNG

(11) **EP 2 687 430 A2**
(43) Veröffentlichungstag der Anmeldung: **22.01.2014**
(21) Anmeldenummer: 13450031.3
(22) Anmeldetag: 22.07.2013
(51) Int. Cl.: B62H 3/10, A47F 7/00

(54) **Fahrradpräsentationsständer**

(30) Priorität: 20.07.2012 AT 8142012
(71) Anmelder: Üblacker, Michael, 5151 Nußdorf am Hunsberg (AT)
(72) Erfinder: Üblacker, Michael, 5151 Nußdorf am Hunsberg (AT)
(74) Vertreter: Keschmann, Marc

(57) **Zusammenfassung**

Bei einem Präsentationsständer für Fahrräder mit einem Fußteil (1), der ein Aufnahmeteil (7) zur Halterung eines Rahmenrohres (13) des Fahrrades (10) trägt, umfasst das Aufnahmeteil (7) ein Auflager (8) für ein Tretlagerrohr (9) des Fahrrades (10) und einen schräg nach oben geneigten Ausleger (11) zum Stützen des vom Tretlagerrohr (9) zum Lenkkopf führenden Rahmenrohres (13). Der Ausleger (11) weist eine Befestigungseinrichtung zum Befestigen des Rahmenrohrs (13) am Ausleger (11) auf, wobei die Befestigungseinrichtung eine Spannriemenhalterung (15) mit einem flexiblen Spannriemen (26) aufweist, der angeordnet ist, um das Rahmenrohr (13) zu umschließen und gegen die Ausleger (11) zu spannen.

## Beschreibung

Die Erfindung betrifft einen Fahrradpräsentationsständer mit einem Fußteil, der ein Aufnahmeteil zur Halterung eines Rahmenrohres des Fahrrades trägt, wobei das Aufnahmeteil ein Auflager für ein Tretlagerrohr des Fahrrades und einen schräg nach oben geneigten Ausleger zum Stützen des vom Tretlagerrohr zum Lenkkopf führenden Rahmenrohres umfasst, wobei der Ausleger eine Befestigungseinrichtung zum Befestigen des Rahmenrohrs am Ausleger aufweist.

Ein derartiger Präsentationsständer für Fahrräder ist beispielsweise der CH 688105 A5 und der DE 102004040977 A1 zu entnehmen.

Ein Fahrradspräsentationsständer ist eine Halteeinrichtung für Fahrräder, mit welcher ein Fahrrad in einer vorgegebenen Position in Abstand vom Boden gehalten wird. Ein solcher Ständer ist insbesondere für Präsentationszwecke in privatem Rahmen oder in Verkaufsstellen geeignet. Der Ständer ist jedoch auch zum Zweck der Montage eines Fahrrads oder zur Pflege desselben vorteilhaft.

Bei den bekannten Präsentationsständern erfolgt die Abstützung des Fahrrads an zumindest zwei Punkten, nämlich an einem Auflager für das Tretlagerrohr des Fahrrads und an einem schräg nach oben geneigten Ausleger zum Stützen des vom Tretlagerrohr zum Lenkkopf führenden Rahmenrohrs. Um zu verhindern, dass das Fahrrad vom Ständer herabfällt, ist meist eine Befestigungseinrichtung vorgesehen, mit welcher das Rahmenrohr am Ausleger befestigt werden kann. Die Befestigungseinrichtung weist meist einen Feststellhaken oder Bügel auf, der am Ausleger befestigt ist und das Rahmenrohr übergreift. Durch Festziehen einer Schraube oder Spannen einer Feder kann der Feststellhaken gegen den Ausleger gespannt werden. Eine derartige Ausbildung hat jedoch eine Reihe von Nachteilen. Beispielsweise verlaufen gerade im Bereich der Auflage des Tretlagerrohrs und des Rahmenrohrs am Ausleger, d.h. an der Unterseite der genannten Teile, Kabel wie beispielsweise Brems- oder Schaltseile, welche zum einen eine satte Auflage auf dem Auflager und/oder dem Ausleger erschweren und zum anderen die Gefahr eines unerwünschten Quetschens der Kabel hervorrufen. Weiters besteht die Gefahr, dass der Feststellhaken bzw. Bügel, welcher das Rahmenrohr auf den Ausleger drückt, den Rahmen verletzt, da eine relativ große Punktbelastung entsteht. Ein weiteres Problem ist, dass in dem Bereich, in dem der Feststellhaken bzw. Bügel mit dem Rahmenrohr zusammenwirkt, meist Halterungen für Trinkflaschen od. dgl. am Rahmenrohr befestigt sind, was das korrekte Anbringen des Feststellhakens bzw. Bügels erschwert.

Die vorliegende Erfindung zielt daher darauf ab, einen Präsentationsständer der eingangs genannten Art dahingehend weiterzubilden, dass das Rahmenrohr in einfacher Weise und sicher am Ausleger befestigt werden kann, wobei dies unabhängig von der jeweiligen Dimension und der Querschnittsform des Rahmenrohrs und unabhängig von allfälligen Zusatzteilen, wie insbesondere Getränkeflaschenhalterungen, die am Rahmenrohr befestigt sind, gelingen soll.

Zur Lösung dieser Aufgabe sieht die vorliegende Erfindung bei einem Präsentationsständer der eingangs genannten Art vor, dass die Befestigungseinrichtung eine Spannriemenhalterung mit einem flexiblen Spannriemen aufweist, der angeordnet ist, um das Rahmenrohr zu umschließen und gegen den Ausleger zu spannen. Die Erfindung schlägt abweichend von den im Stand der Technik beschriebenen starren Feststellhaken bzw. Bügeln eine flexible Spanneinrichtung vor, mit welcher das Rahmenrohr umschlossen wird. Dadurch wird eine Punktbelastung und damit einhergehend eine Beschädigung des Rahmenrohrs vermieden. Weiters wird dadurch ein sicheres Festspannen des Rahmenrohrs unabhängig von dem Durchmesser oder der Querschnittsform des Rahmenrohrs gewährleistet, da sich der flexible Spannriemen von selbst an das Rahmenrohr anpasst. Im Gegensatz zu einseitig verankerten Feststellhaken bzw. Bügeln gelangt der flexible Spannriemen an beiden Seiten des Rahmenrohrs zur Wirkung, sodass aufgrund des das Rahmenrohr umschließenden Verlaufs des Spannriemens eine symmetrische Krafteinleitung erreicht wird. Schließlich kann der flexible Spannriemen an beliebigen Stellen des Rahmenrohrs befestigt werden, wobei es in der Regel auch ohne weiteres möglich ist, den Spannriemen im Bereich des Getränkeflaschenhalters anzuordnen, wobei der Spannriemen entweder in einem Spalt zwischen dem Gestell der Trinkflaschenhalterung und dem Rahmenrohr hindurch gesteckt wird oder das Gestell der Trinkflaschenhalterung mitumschließt. Die erfindungsgemäße Spannriemenhalterung erlaubt es außerdem in einfacher Weise die Spannkraft an die jeweiligen Bedürfnisse anzupassen. Gemäß einer bevorzugten Ausführungsform ist hierbei vorgesehen, dass der Spannriemen als Zahnriemen ausgebildet ist, der mittels einer Schnalle spannbar ist.

Um die Flexibilität der Befestigungseinrichtung zu erhöhen, ist bevorzugt vorgesehen, dass die Spannriemenhalterung in Längsrichtung des Auslegers verstellbar angeordnet ist.

Um das Quetschen von an der Unterseite des Tretlagerrohrs und des Rahmenrohrs verlaufender Kabel und Seile zu vermeiden, ist gemäß einer bevorzugten Ausbildung vorsehen, dass der Ausleger im Querschnitt im Wesentlichen V- oder U- förmig ausgebildet ist. Ein derartiger V- oder U-förmiger Querschnitt erlaubt es, die erwähnten Kabel oder Seile im freien Querschnitt zwischen den Schenkeln des V- oder U-förmigen Querschnitts anzuordnen.

Eine weitere Verbesserung ergibt sich, wenn, wie es einer bevorzugten Ausbildung entspricht, der Ausleger an seinem dem Auflager für das Tretlagerrohr abgewandten Ende ein über den Querschnitt des Auslegers vorragendes Stützelement für das Rahmenrohr aufweist, das zu beiden Seiten der Mittelebene jeweils eine nach innen geneigt verlaufende Auflagefläche aufweist. Dadurch, dass das Stützelement über den Querschnitt des Auslegers vorragt, wird erreicht, dass das Rahmenrohr nicht unmittelbar am Ausleger abgestützt wird, sondern lediglich am Auflager für das Tretlagerrohr und dem genannten Stützelement. Besonders bevorzugt ist das Stützelement höhenverstellbar am Ausleger angeordnet, wodurch die Winkellage des Fahrrads in einfacher Weise eingestellt werden kann. Dies zielt in der Regel darauf ab, eine möglichst horizontale Lage des Fahrrads einzustellen. Die Höhenverstellung des Stützelements ist bevorzugt stufenlos möglich.

Um im Bereich der Auflageflächen des Stützelements ein Quetschen von Kabeln bzw. Seilen zu vermeiden, ist gemäß einer weiteren Ausbildung der Erfindung vorgesehen, dass die Auflageflächen des Stützelements jeweils eine Ausnehmung für das Hindurchführen von am Rahmenrohr angeordneten Kabeln aufweist.

Aufgrund der beschriebenen Horizontaleinstellung, die lediglich eine Einstellung des beschriebenen Stützelements erfordert, kann darauf verzichtet werden, den Ausleger selbst verstellbar zu gestalten. Dies erhöht die Stabilität des Präsentationsständers und reduziert die Möglichkeit von Fehlbedienungen und das Verletzungsrisiko. Die Ausbildung ist in diesem Zusammenhang bevorzugt derart getroffen, dass der Ausleger eine vorgegebene, nicht veränderbare Neigung relativ zum Fußteil aufweist.

Manchmal kann es erforderlich sein, das Fahrrad vorübergehend vom Präsentationsständer herunterzunehmen, um beispielsweise eine Probefahrt durchzuführen. Um bei solchen Gelegenheiten zu vermeiden, dass der Spannriemen aufwändig gelöst und das Fahrrad vom Ständer abmontiert werden muss, ist gemäß einer bevorzugten Weiterbildung vorgesehen, dass das Aufnahmeteil lösbar mit dem Fußteil verbunden ist, insbesondere in Vertikalrichtung aus dem Fußteil heraushebbar ist. Das Aufnahmeteil bleibt somit mit dem Rahmenrohr des Fahrrads fest verbunden und es wird das Fahrrad mit dem fest verbundenen Aufnahmeteil von dem Fußteil gelöst. Das Lösen des Aufnahmeteils vom Fußteil erfolgt dabei in einfacher Weise dadurch, dass das Aufnahmeteil in vertikaler Richtung aus dem Fußteil herausgehoben wird.

Das Fußteil kann beispielsweise in herkömmlicher Weise als Fußkreuz aus mindestens drei im Winkel zueinander angeordneten Streben ausgebildet sein. Bevorzugt kann weiters ein Vertikalrohr vorgesehen sein, welches mit seinem unteren Ende an dem Fußkreuz befestigt ist und an dessen oberen Ende das Aufnahmeteil trägt. Alternativ kann anstelle des Fußkreuzes eine am Boden in geeigneter Weise befestigte bzw. verankerte Schiene vorgesehen sein, in welcher das Vertikalrohr verschiebbar geführt und in der gewünschten Verschiebeposition fixiert werden kann. Eine derartige Ausbildung bietet insbesondere die Möglichkeit, eine Mehrzahl von Präsentationsständern auf einer Schiene anzuordnen, was insbesondere für Verkaufsstellen von Vorteil ist.

Bevorzugt ist das Aufnahmeteil relativ zum Fußteil um eine vertikale Achse verdrehbar gelagert. Dadurch kann das gesamte

Fahrrad um 360° um die eigene Achse frei gedreht werden, was für Präsentationszwecke überaus vorteilhaft ist.

Die Erfindung wird nachfolgend anhand von in der Zeichnung dargestellten Ausführungsbeispielen näher erläutert. In dieser zeigen Fig.1 den erfindungsgemäßen Fahrradpräsentationsständer samt schematisch angedeutetem Fahrradrahmen in einer auseinander gezogenen Darstellung, Fig.2 eine Detailansicht des Aufnahmeteils in einer auseinander gezogenen Darstellung und Fig.3 eine Detaildarstellung des auf dem Aufnahmeteil befestigten Rahmenrohrs eines Fahrrads.

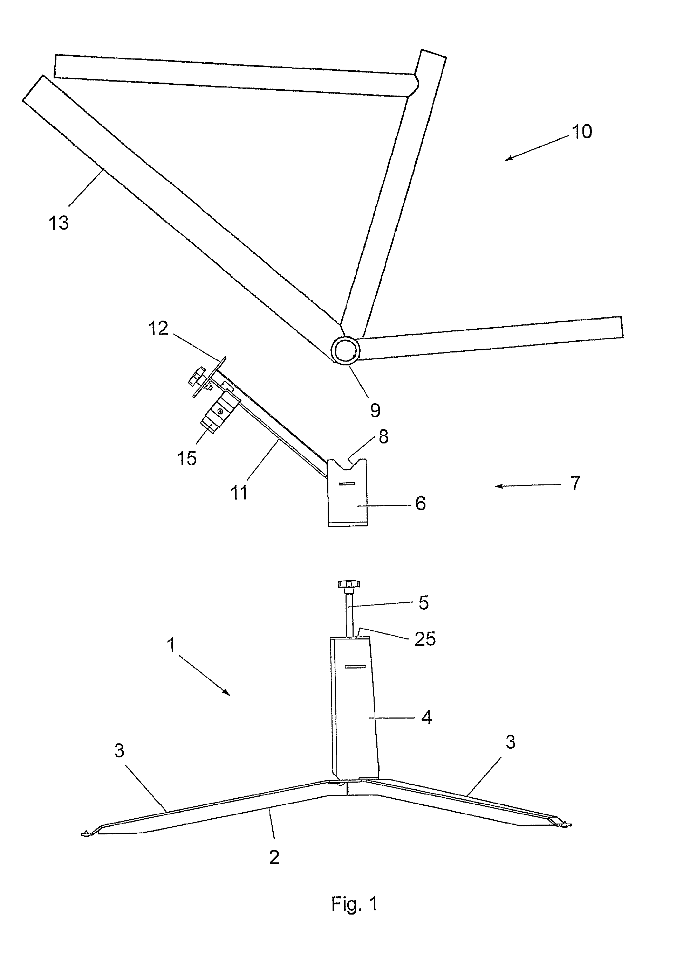

In Fig.1 ist ein Fußteil des Präsentationsständers mit 1 bezeichnet. Der Fußteil besteht aus einem Fußkreuz 2 aus drei im Winkel zueinander angeordneten Streben 3 und einem Vertikalholm 4, welcher mit seinem unteren Ende an dem Fußkreuz 2 befestigt ist. Am oberen Ende ragt eine Stange 5 aus dem Vertikalholm 4 hervor, der im zusammengebauten Zustand eine Ausnehmung eines Stützteils 6 des Aufnahmeteils 7 durchsetzt. Das Stützteil 6 weist ein V-förmiges Auflager 8 für das Tretlagerrohr 9 des Fahrrads 10 auf. Weiters weist das Aufnahmeteil 7 einen Ausleger 11 auf, der mit seinem vorragenden Stützelement 12 das Rahmenrohr 13 abstützt.

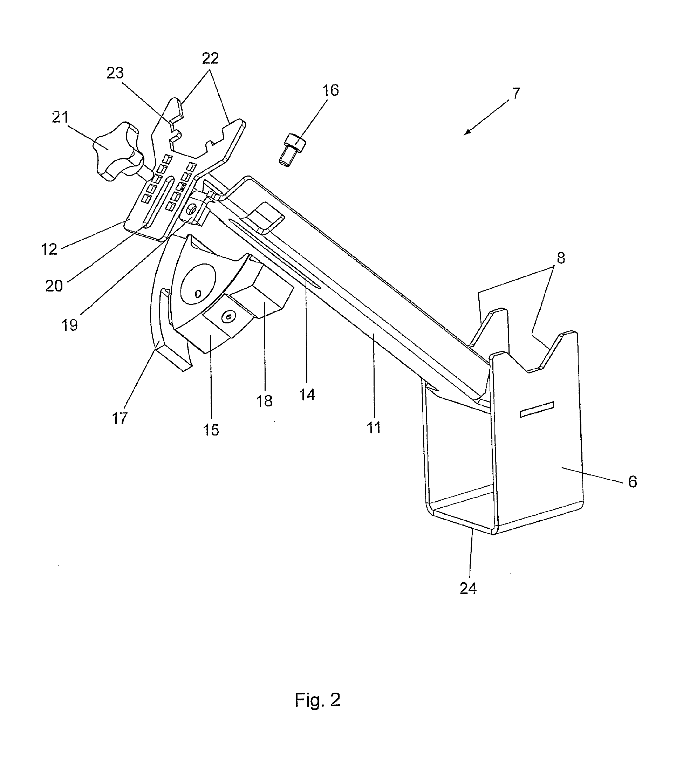

In Fig.2 ist das Aufnahmeteil 7 näher dargestellt. Es ist ersichtlich, dass das Stützteil 6 im Querschnitt U-förmig ausgebildet ist, wobei der Ausleger 11 starr mit den Schenkeln des Stützteils 6 verbunden, insbesondere verschweißt ist. Die beiden Schenkel des Stützteils 6 weisen jeweils ein V-förmiges Auflager 8 für das Tretlagerrohr 9 des Fahrrads 10 auf. Zur Schonung des Tretlagerrohrs 9 kann das Stützteil 6 am Auflager 8 einen Überzug geringerer Härte, wie beispielsweise eine Gummierung, aufweisen. In Fig.2 ist weiters ersichtlich, dass der Ausleger 11 im Querschnitt im Wesentlichen V- bzw. U-förmig ausgebildet ist, wobei zwischen zwei zueinander konvergierenden Schenkeln ein im Wesentlichen flacher Verbindungsabschnitt angeordnet ist, der ein Langloch 14 aufweist. Das Langloch 14 dient der Befestigung einer Spannriemenhalterung 15, wobei die Spannriemenhalterung 15 entsprechend der Längserstreckung des Langlochs 14 in seiner Längsposition am Ausleger 11 justierbar ist. Die Spannriemenhalterung 15 kann durch Festziehen eines das Langloch 14 durchsetzenden Schraubbolzens 16 fixiert werden. Die Spannriemenhalterung 15 weist einen Spangenhalter 17 auf, in welchen ein spangenartiges Ende eines Spannriemens eingreifen kann. Die Spannriemenhalterung 15 weist weiters eine Rückhalteeinrichtung 18 auf, um das gegenüber liegende Ende des Spannriemens im festgespannten Zustand festzuhalten. Wenn der Spannriemen als Zahnriemen ausgebildet ist, weist die Rückhalteeinrichtung 18 einen zahnartigen Vorsprung auf, der mit den Zähnen des Zahnriemens nach Art einer Ratsche zusammenwirken kann.

An dem dem Stützteil 6 abgewandten Ende des Auslegers 11 weist der Ausleger 11 einen umgebogenen Abschnitt 19 auf, an dem das Stützelement 12 befestigt wird. Das Stützelement 12 weist ein Langloch 20 auf, das von einem einen Kreuzgriff aufweisenden Schraubbolzen 21 durchsetzt wird, wobei der Schraubbolzen in ein im umgebogenen Abschnitt 19 ausgebildetes Gewinde eingeschraubt wird. Das Langloch 20 erlaubt hierbei eine Einstellung der Höhenposition des Stützelements 12. Das Stützelement 12 weist zu beiden Seiten der Mittelebene jeweils eine nach innen geneigt verlaufende Auflagefläche 22 auf, die mit wenigstens einer Ausnehmung 23 versehen ist. An der Auflagefläche 12 stützt sich das Rahmenrohr 13 ab. Durch Einstellung der Höhenlage des Stützelements 12 kann die Neigung des Fahrrads insgesamt eingestellt werden, wobei in der Regel eine horizontale Lage des Fahrrads bevorzugt wird.

Das Stützteil 6 weist eine ebene Auflagefläche 24 auf, die mit einer entsprechenden ebenen Auflagefläche 25 am Vertikalholm 4 im zusammengebauten Zustand des Aufnahmeteils 7 mit dem Fußteil 1 zusammenwirkt. Gemeinsam mit der Stange 5, die ein Loch des Stützteils 6 durchsetzt, wird eine freie Drehbarkeit des Aufnahmeteils 7 relativ zum Fußteil 1 ermöglicht. Dies ist detailliert in Fig. 5 dargestellt, es ist ersichtlich, dass die Stange 5 mittels eines Fußteils 29 an einer Platte 28 befestigt ist. Die Stange 5 durchsetzt die einander zugewandten Stirnflächen 24, 25 des Vertikalholms 4 und des Stützteils 6 und die Platte 30. An dem über die Platte 30 ragenden Abschnitt weist die Stange 5 ein Gewinde auf, auf das ein Kreuzgriff 31 aufgeschraubt werden kann. Wenn der Vertikalholm 4 und das Stützteil 6 mittels Festschrauben des Kreuzgriffs 31 gegeneinander verspannt sind, ist die Drehposition des Aufnahmeteils 7 relativ zum Fußteil 1 fixiert. In nicht festgespanntem Zustand kann das Aufnahmeteil 7 gegenüber dem Fußteil 1 frei um die von der Stange 5 gebildete Drehachse verdreht werden.

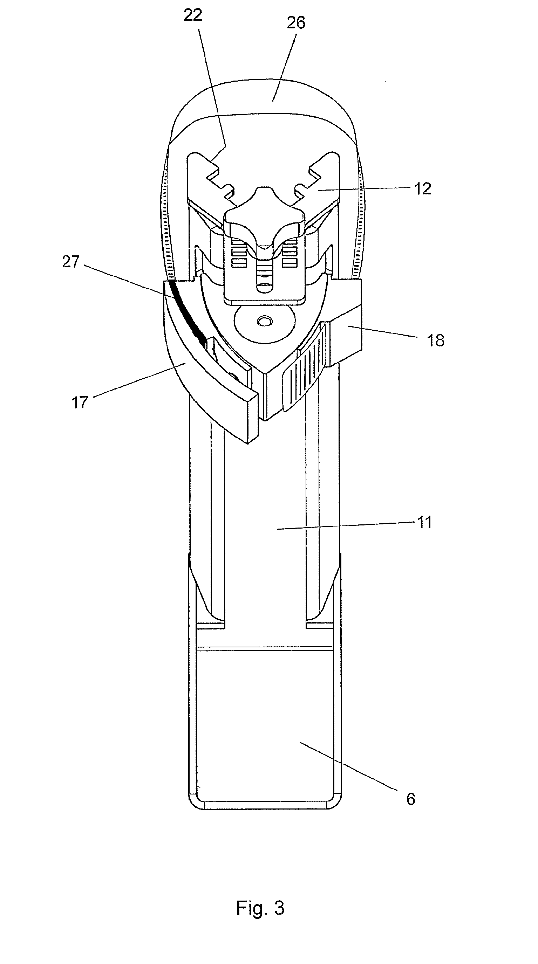

In Fig.3 ist nun die Anordnung eines Spannriemens 26 dargestellt. Der Spannriemen 26 ist als Zahnriemen ausgebildet und weist ein spangenartiges Ende 27 auf, das im Spangenhalter 17 gehalten ist. Das gegenüberliegende Ende des Spannriemens 26 ist in die Rückhalteeinrichtung 18 eingeführt und wird nach einem Festspannen des Spannriemens 26 an der entsprechenden Position in der Rückhalteinrichtung 18 festgehalten. Der Spannriemen 26 ist flexibel ausgebildet und besteht bevorzugt aus einem elastisch dehnbaren Material.

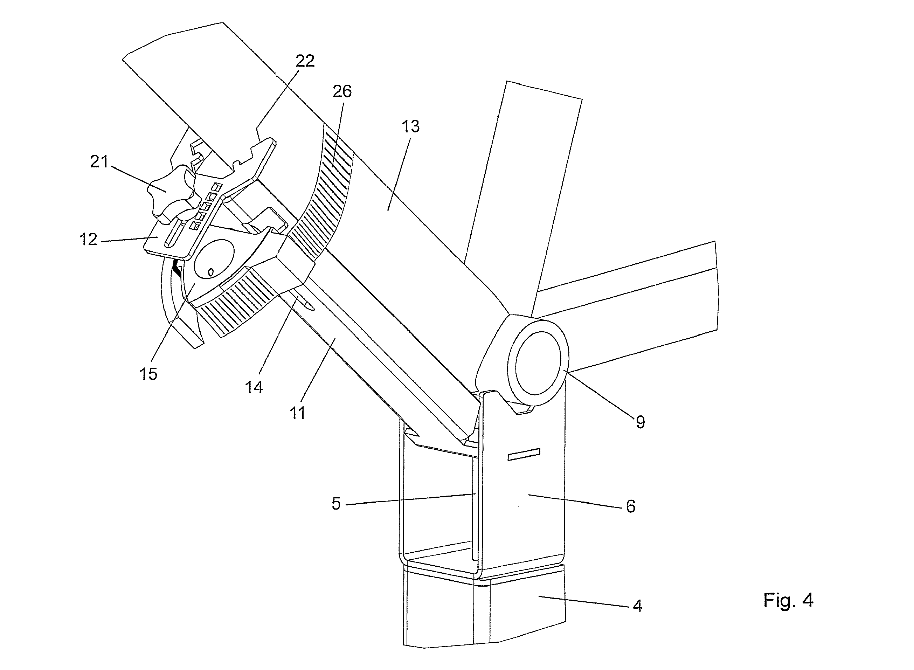

In Fig.4 ist ersichtlich, wie der Spannriemen 26 das Rahmenrohr 13 des Fahrrads umschließt. Weiters ist ersichtlich, dass das Rahmenrohr 13 lediglich an zwei Stellen auf dem Aufnahmeteil 7 aufliegt, und zwar am Auflager 8, nämlich den schrägen Auflageflächen des Stützteils 6, und am Stützelement 12, nämlich den schräg nach innen konvergierenden Auflageflächen 22 des Stützelements 12.

## Patentansprüche

1. Präsentationsständer für Fahrräder mit einem Fußteil (1), der ein Aufnahmeteil (7) zur Halterung eines Rahmenrohres des Fahrrades trägt, wobei das Aufnahmeteil (7) ein Auflager (8) für ein Tretlagerrohr (9) des Fahrrades (10) und einen schräg nach oben geneigten Ausleger (11) zum Stützen des vom Tretlagerrohr (9) zum Lenkkopf führenden Rahmenrohres (13) umfasst, wobei der Ausleger (11) eine Befestigungseinrichtung zum Befestigen des Rahmenrohrs (13) am Ausleger (11) aufweist, **dadurch gekennzeichnet, dass** die Befestigungseinrichtung eine Spannriemenhalterung (15) mit einem flexiblen Spannriemen (26) aufweist, der angeordnet ist, um das Rahmenrohr (13) zu umschließen und gegen den Ausleger (11) zu spannen.

2. Präsentationsständer nach Anspruch 1, **dadurch gekennzeichnet, dass** die Spannriemenhalterung (15) in Längsrichtung des Auslegers (11) verstellbar angeordnet ist.

3. Präsentationsständer nach Anspruch 1 oder 2, **dadurch gekennzeichnet, dass** der Spannriemen (26) als Zahnriemen ausgebildet ist, der mittels einer Schnalle spannbar ist.

4. Präsentationsständer nach Anspruch 1, 2 oder 3, **dadurch gekennzeichnet, dass** der Ausleger (11) im Querschnitt im Wesentlichen V- oder U-förmig ausgebildet ist.

5. Präsentationsständer nach einem der Ansprüche 1 bis 4, **dadurch gekennzeichnet, dass** der Ausleger (11) an seinem dem Auflager für das Tretlagerrohr (9) abgewandten Ende ein über den Querschnitt des Auslegers (11) vorragendes Stützelement (12) für das Rahmenrohr (13) aufweist, das zu beiden Seiten der Mittelebene jeweils eine nach innen geneigt verlaufende Auflagefläche (22) aufweist.

6. Präsentationsständer nach Anspruch 5, **dadurch gekennzeichnet, dass** die Auflageflächen (22) des Stützelements (12) jeweils eine Ausnehmung (23) für das Hindurchführen von am Rahmenrohr (13) angeordneten Kabeln aufweist.

7. Präsentationsständer nach einem der Ansprüche 1 bis 6, **dadurch gekennzeichnet, dass** der Ausleger (11) eine vorgegebene, nicht veränderbare Neigung relativ zum. Fußteil (1) aufweist.

8. Präsentationsständer nach Anspruch 5, 6 oder 7, **dadurch gekennzeichnet, dass** das Stützelement (12) insbesondere stufenlos höhenverstellbar am Ausleger (11) angeordnet ist.

9. Präsentationsständer nach einem der Ansprüche 1 bis 8, **dadurch gekennzeichnet, dass** das Aufnahmeteil (7) lösbar mit dem Fußteil (1) verbunden ist, insbesondere in Vertikalrichtung aus dem Fußteil (1) heraushebbar ist.
